Europäisches Patentamt

**European Patent Office**

**Office européen des brevets**

(11) Numéro de publication : **0 015 185**
**B1**

(12) **FASCICULE DE BREVET EUROPÉEN**

(45) Date de publication du fascicule du brevet :
20.04.83

(51) Int. Cl.³ : **B 25 J 15/04**, B 25 J 17/00,
B 25 J 19/00

(21) Numéro de dépôt : **80400177.4**

(22) Date de dépôt : **05.02.80**

(54) Raccord étanche pour télémanipulateur.

(30) Priorité : 05.02.79 FR 7902928

(43) Date de publication de la demande :
03.09.80 Bulletin 80/18

(45) Mention de la délivrance du brevet :
20.04.83 Bulletin 83/16

(84) Etats contractants désignés :
BE DE GB IT SE

(56) Documents cités :
FR A 1 329 005
FR A 1 338 878
FR A 1 409 935
FR A 1 526 167
GB A 825 553

(73) Titulaire : SOCIETE D'INNOVATIONS TECHNIQUES
87, rue Nationale
F-78940 La Queue-les-Yvelines (FR)
Garnier, André
Ferme de Bel-Air Lueil-sous-Faye
F-86200 Loudun (FR)

(72) Inventeur : Garnier, André
Ferme de Bel-Air Lueil-sous-Faye
F-86200 Loudun (FR)

(74) Mandataire : Tony-Durand, Serge
Cabinet Tony-Durand 22, Boulevard Voltaire
F-75011 Paris (FR)

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

Raccord étanche pour télémanipulateur

La présente invention a pour objet un raccord étanche pour télémanipulateur destiné notamment à la manipulation à distance de produits radio-actifs dangereux, à l'intérieur d'une cellule étanche.

On connaît diverses réalisations de ce genre, notamment celles décrites dans les documents GB-A 825.553 et FR-A 1.329.005.

Le document GB-A 825.553 décrit un raccord étanche pour télémanipulateur dans lequel un axe mobile traverse un corps composé d'éléments assemblés les uns derrière les autres comme dans l'objet de l'invention. Ces éléments sont verrouillés entre eux par des systèmes de verrouillage du type à baïonnette indépendants du système de verrouillage des parties de l'axe mobile. Ainsi, le verrouillage de l'ensemble du dispositif est complexe et l'utilisateur ne peut pas, par une manipulation unique, assembler simultanément les parties de l'axe et celles du corps.

Le document FR-A 1.329.005 décrit une pince de télémanipulateur qui présente l'inconvénient de ne pas assurer une étanchéité suffisante entre l'intérieur de la cellule (zone chaude) et la zone de travail (zone froide). Cette pince est équipée d'un système de verrouillage du type à baïonnette assurant la fixation de la tête de pince sur l'extrémité du bras du télémanipulateur, comme mentionné à la page 2 colonne de droite de ce document.

Le raccord visé par l'invention est prévu pour pouvoir s'adapter sur n'importe quel télémanipulateur du type maître-esclave. Il se monte entre la pince de manipulation et la genouillère esclave du télémanipulateur.

Le but essentiel de l'invention est de remédier aux inconvénients des réalisations antérieures mentionnées ci-dessus en assurant une étanchéité parfaite entre l'intérieur de la cellule et la zone de travail. D'autre part, du fait que le travail avec ce raccord doit se faire à distance, c'est-à-dire sans aucune intervention manuelle, il est indispensable de pouvoir effectuer, dans de parfaites conditions de sécurité, les opérations suivantes :

a) connecter ou déconnecter la pince
b) connecter ou déconnecter l'embout du télémanipulateur.

Un raccord pour télémanipulateur connu par exemple du brevet FR-A-1409935 comprend un premier élément, appelé ci-après « raccord de pince » et comportant la pince, un second élément appelé ci-après « raccord étanche » et un troisième élément appelé ci-après « raccord du télémanipulateur », le raccord étanche étant emboîté coaxialement dans le raccord de pince et le raccord du télémanipulateur étant emboîté coaxialement dans le raccord étanche, et d'autre part, relié à un bras porteur articulé, ces trois éléments étant traversés de bout en bout par un axe mobile en translation pour commander l'ouverture et la fermeture de la pince, cet axe étant composé de trois parties, chaque partie de l'axe mobile étant reliée avec l'un des trois éléments proprements dits, l'ouverture du raccord étanche étant fermée par une membrane d'étanchéité qui est reliée avec la partie de l'axe mobile du raccord étanche pouvant se déplier pendant toute la course en translation de l'axe mobile et accompagnant le déplacement de cet axe, la jonction entre les corps des trois éléments proprements dits, et entre les trois parties de l'axe mobile étant réalisée par un système de verrouillage à baïonnette qui permet d'effectuer la connexion ou la déconnexion à distance du raccord de pince et du raccord du télémanipulateur au raccord étanche.

Conformément à l'invention, le raccord se caractérise par le fait que premièrement le système de verrouillage à baïonnette entre les corps des trois éléments permet ce verrouillage par poussée axiale de l'élément à verrouiller (le raccord étanche ou le raccord du télémanipulateur) contre l'élément de réception (le raccord de pince ou le raccord étanche), puis par rotation de l'élément à verrouiller autour de son axe, des pieds ménagés radialement sur les corps des éléments à verrouiller venant alors s'engager dans des baïonnettes de l'élément de réception et étant automatiquement verrouillés dans celles-ci au moyen d'une pièce faisant partie de l'élément de réception, et deuxièmement les trois parties de l'axe mobile sont équipées d'un même système de verrouillage à baïonnettes que pour les corps des éléments, et les systèmes à baïonnettes sont alignés entre eux par l'immobilisation par paires et en rotation des trois parties de l'axe mobile par rapport aux corps des éléments afin que l'assemblage des parties de l'axe mobile soit réalisé conjointement avec l'assemblage des trois corps des éléments du raccord par les mêmes mouvements d'assemblage, et que la sécurité du déverrouillage de la pince soit assurée.

Le raccord selon l'invention présente par rapport aux raccords antérieurs connus des avantages très importants :

1. Il peut être utilisé étanche ou non, en enlevant simplement le raccord étanche (deuxième élément), ce qui est impossible sur les raccords connus. En effet, un dispositif sans raccord étanche peut être employé dans certaines télémanipulations, ce qui est rendu possible avec le raccord selon l'invention qui permet de connecter directement le premier et le troisième élément.

2. Les raccords étanches antérieurs ne peuvent manipuler en pratique que des charges de l'ordre de 5 à 6 kilos. Le raccord selon l'invention permet la manipulation de charges très supérieures, de l'ordre de 30 kilos et même davantage.

3. Au cas où un élément de transmission mécanique du télémanipulateur viendrait à se rompre, il n'est pas possible avec des moyens à distance de déconnecter les raccords étanches antérieurs, même si ceux-ci sont pourvus d'un râtelier spécial. Le raccord selon l'invention peut être déconnecté sur son râtelier quel que soit le mouvement du télémanipulateur rompu, et même mieux encore par un télémanipulateur voisin. Cet avantage est très important, car dans le cas d'une utilisation de télémanipulateur en milieu radioactif ou contaminé, il n'est plus nécessaire de faire intervenir un technicien en scaphandre spécial pour pouvoir déconnecter manuellement le raccord défectueux.

D'autres particularités et avantages de l'invention apparaîtront au cours de la description qui va suivre, faite en référence aux dessins annexés qui en illustrent des modes de réalisation non limitatifs.

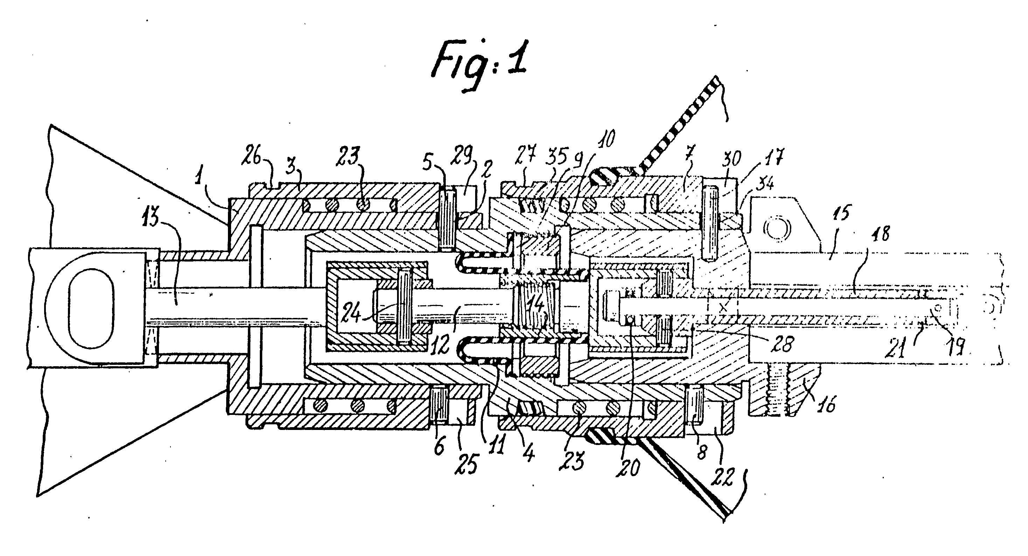

La figure 1 est une vue d'ensemble d'un mode de réalisation du raccord selon l'invention, montrant son premier, son deuxième et son troisième éléments assemblés.

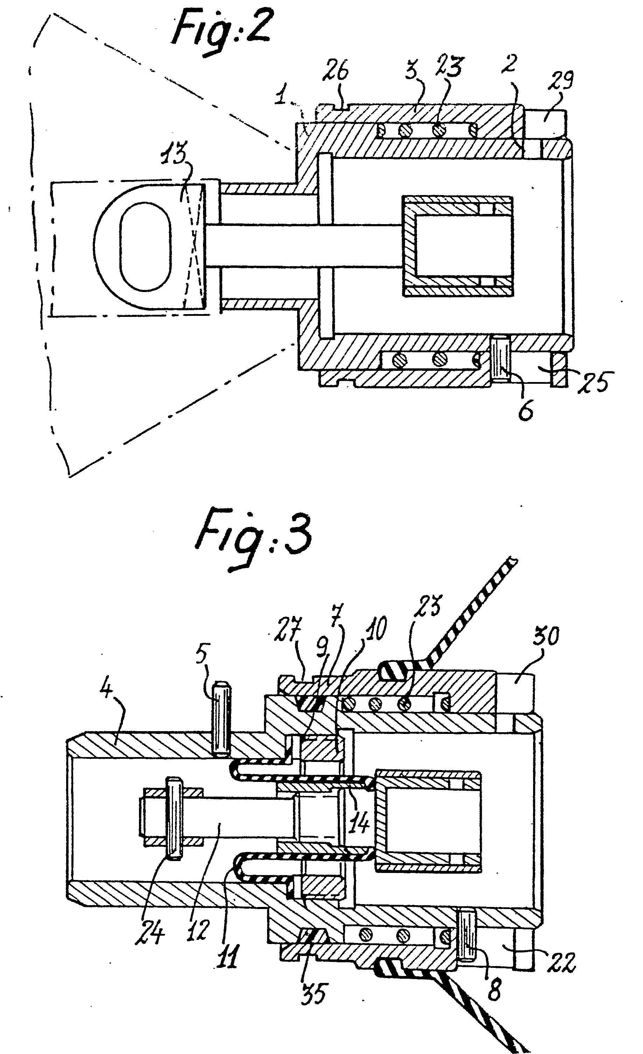

La figure 2 est une vue du raccord de pince du raccord de la figure 1.

La figure 3 est une vue du raccord étanche faisant partie du raccord de la figure 1.

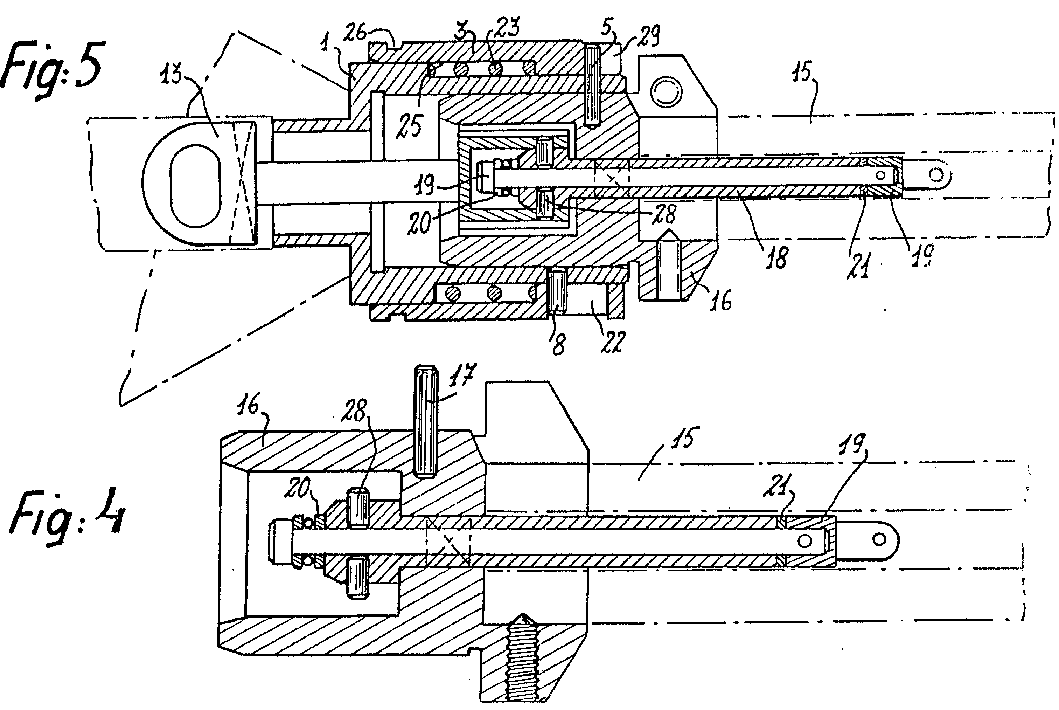

La figure 4 est une vue du raccord de télémanipulateur faisant partie du raccord de la figure 1.

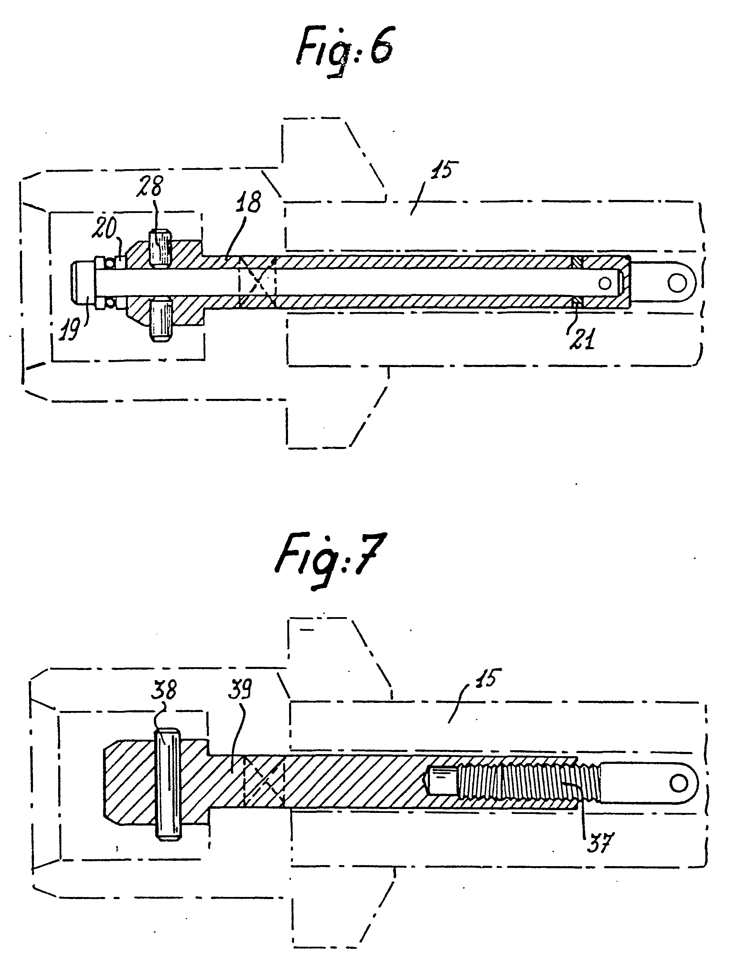

La figure 5 est une vue d'un raccord suivant un second mode de réalisation de l'invention, formé par accouplement des premier et troisième éléments sans raccord étanche (deuxième élément).

La figure 6 montre un système d'accouplement possible du troisième élément pour télémanipulateur équipé de câble ou chaîne.

La figure 7 est une vue en élévation analogue à la figure 6 montrant un système d'accouplement du troisième élément pour télémanipulateur équipé d'un embout fileté.

Le raccord comprend trois parties distinctes :

1er élément : raccord de pince
2ème élément : raccord étanche
3ème élément : raccord du télémanipulateur

### A. Premier élément : Raccord de pince

Ce raccord se monte directement sur la pince, et il se compose de deux éléments essentiels :

1. Un corps 1 comportant un centrage pour l'accouplement à la pince et deux baïonnettes de verrouillage 2, ainsi que les deux pieds du système de sécurité de déverrouillage 6.

2. Une bague coulissante 3 permettant d'obtenir, au choix, la position de verrouillage ou de déverrouillage des 2ème et 3ème éléments du raccord.

Le mouvement de translation de la bague 3 sur le corps 1 permet d'obtenir la position désirée dans l'un ou l'autre des deux cas mentionnés ci-dessous. La commande à distance de ce mouvement est expliquée dans la description du mode d'utilisation.

*NOTA :* Ce premier élément peut éventuellement faire corps avec la pince.

### B. Deuxième élément : Raccord étanche

Ce raccord est la pièce maîtresse de ce dispositif car il assure l'étanchéité (voir paragraphe « Description générale »).

Il se compose de trois éléments essentiels :

1. Un corps 4 comportant plusieurs parties :

   a) Un centrage permettant le montage du raccord de pince (1er élément) et deux pieds 5 pour le verrouillage des deux baïonnettes positionnées dans le corps 1.

   b) Un centrage permettant de recevoir la bague éclipsable 7 ; elle est munie d'un joint pour assurer l'étanchéité 35. Celui-ci peut être remplacé par une membrane qui serait raccordée à la bague éclipsable 7.

   c) Un centrage qui comme celui mentionné ci-dessus reçoit également la bague coulissante 7 qui comporte les deux baïonnettes 34 et les deux pieds 8 du système de sécurité de déverrouillage. Au fond de ce centrage se trouvent une rondelle 9 et un écrou 10 destinés au blocage de la membrane 11. Ce mode de fixation n'étant pas limitatif n'est qu'un principe.

2. Une bague éclipsable 7 permettant d'obtenir au choix la position de verrouillage ou de déverrouillage du 3ème élément par rapport au 2ème.

Le mouvement de translation sur le corps 4 permet d'obtenir la position désirée dans l'un ou l'autre des deux cas mentionnés ci-dessus. La commande à distance de ce mouvement est expliquée dans la description du mode d'utilisation.

Sur cette bague sont prévues deux gorges destinées à recevoir le booting (manche d'étanchéité simple ou double) pour l'étanchéité extérieure.

3. Un axe de transmission permet d'assurer la liaison entre l'axe de commande de pince 13 et celui du 2ème élément 12, l'accouplement s'effectuant par système baïonnette. La membrane 11 est fixée sur cet axe par un écrou 14 ; celle-ci se déplie pendant le mouvement de translation de l'axe 12.

### C. Troisième élément : Raccord du télémanipulateur

Ce raccord se monte directement sur l'embout 15 du système différentiel du télémanipulateur. Il se compose de deux éléments essentiels :

1. Un corps 16 permettant d'une part son assemblage avec l'embout 15 du télémanipulateur, et d'autre part, son accouplement avec le deuxième élément (raccord étanche) ; il comporte les deux pieds 17 pour le verrouillage des deux baïonnettes positionnées dans le corps 4.

2. Un axe 18 de transmission qui permet d'assurer la liaison entre l'axe de commande du deuxième élément (raccord étanche) et l'attache (câble ou chaîne du télémanipulateur).

Cet axe comporte deux systèmes de liaison :

a) Côté raccordement avec l'axe 12 du $2^{ème}$ élément : un axe 18 avec un système baïonnette ;

b) Côté raccordement du télémanipulateur (serrage-pince) : un axe 19 avec montage par rivet pour transmission par chaîne, ou par embout serti pour câble.

La conception de cet axe a été particulièrement étudiée pour tenir compte des différents mouvements de rotation de pince, c'est-à-dire que celle-ci peut aller d'un tour à plusieurs tours. Pour cette raison, il a été nécessaire, et en particulier dans le cas où la transmission du mouvement de serrage-pince se fait par chaîne (qui de par sa conception est rigide), de prévoir un dispositif tel qu'il est prévu sur le plan de principe. L'on remarque que l'axe 12 de transmission qui permet d'assurer la liaison entre l'axe de commande du $2^{ème}$ élément (raccord étanche) et l'axe 18, 19 de liaison avec la commande du télémanipulateur (câble ou chaîne), ont été conçus en deux parties.

a) La première partie 18 a son mouvement de translation guidé par un carré. Cela assure d'une part une bonne position de l'axe 18 du $3^{ème}$ élément et d'autre part cela permet, dans le cas d'une rupture de l'attache de transmission du mouvement de serrage-pince du télémanipulateur, de déconnecter le premier et le deuxième éléments à distance, ceci afin de pouvoir extraire le télémanipulateur sans rompre l'étanchéité. Le $3^{ème}$ élément monté directement sur l'embout 15 du système différentiel fait donc partie intégrante du télémanipulateur, ce qui permet de par son mouvement de rotation, de pouvoir déconnecter le $1^{er}$ et le $2^{ème}$ éléments.

b) La deuxième partie 19 est l'axe permettant de connecter la commande de serrage-pince du télémanipulateur (câble ou chaîne). Il est monté dans l'axe 18 dont le déplacement en translation est guidé par un carré. Sa rotation est illimitée ce qui permet au raccord faisant l'objet de cette description de pouvoir tourner à l'infini.

Sur cet axe 19 qui assure la transmission du mouvement de serrage-pince du télémanipulateur, il est prévu, pour éviter les efforts de frottement au moment d'une manipulation conjuguant deux mouvements simultanés, c'est-à-dire le serrage et la rotation de la pince, une butée à billes 20 et une rondelle de friction 21.

*NOTA :* La description ci-dessus — indice « b » — n'est qu'un principe. Sur certains télémanipulateurs existants, il est prévu une autre adaptation, comme il est représenté sur la figure 7, ce qui n'entraîne en aucun cas une impossibilité d'utilisation de ce dispositif décrit dans la description générale.

Les pièces 28-18-19 et 21 sont modifiées, ce qui entraîne la suppression des pièces 20-21 et 19, celles-ci étant remplacées par les pièces 37-38 et 39.

Bien entendu, l'invention n'est nullement limitée au mode de réalisation décrit et représenté qui n'a été donné qu'à titre d'exemple.

Il est important de noter que le premier élément peut se monter, sans aucune modification, sur le troisième élément, c'est-à-dire que le deuxième élément n'étant pas utile dans le cas de cellules montées sans dispositif d'étanchéité l'on peut, dans un but de standardisation, utiliser les mêmes pièces.

En conclusion, la présente invention est relative à un raccord étanche qui peut s'adapter sur n'importe quel télémanipulateur et qui présente l'avantage d'assurer une étanchéité parfaite et de pouvoir se connecter ou se déconnecter à distance.

De plus, il est possible de ne pas se servir du $2^{ème}$ élément (raccord étanche) et de pouvoir connecter ou déconnecter les premier et deuxième éléments dans le cas d'utilisation de télémanipulateurs montés dans des cellules où une étanchéité ne s'avère pas nécessaire.

### Principe d'utilisation

Dans tous les cas, la pince sur laquelle est monté le premier élément, est placée dans un dispositif appelé « Appareil de montage et démontage » qui est fixé à l'intérieur de la cellule (côté chaud).

Trois cas de montage ou démontage de ce raccord peuvent se présenter :

a) introduction du télémanipulateur dans la cellule

b) sortie du télémanipulateur extérieur-cellule

c) montage ou démontage de la pince équipée du $1^{er}$ élément avec l'embout du télémanipulateur ($3^{ème}$ élément) sans raccord étanche ($2^{ème}$ élément).

### A. Introduction

Comme il est mentionné ci-dessus, la pince équipée du $1^{er}$ élément, se trouve montée dans un appareil qui va permettre d'effectuer la connection de ce dispositif.

Le $2^{ème}$ élément monté sur le booting a été préalablement introduit à l'intérieur de la cellule et a été positionné dans un appareil qui va permettre la connection de cet élément avec le $3^{ème}$, qui, lui, est solidaire du télémanipulateur.

En passant par la traversée murale, le bras esclave du télémanipulateur qui comporte le $3^{ème}$ élément de ce dispositif, passe à l'intérieur du booting (manche d'étanchéité).

1. Montage du $2^{ème}$ et du $3^{ème}$ éléments

Le corps 4 et l'axe 12 étant immobilisés dans l'appareil de montage, introduire le 3ème élément dans le corps 4, en se référant à un repère visuel gravé sur la bague coulissante 7 ; les pions 17 et 28 se trouvant en face des baïonnettes, effectuer un mouvement de poussée. La bague coulissante 7 qui est guidée par une lumière 22 dans son déplacement latéral, s'enfonce et dégage la baïonnette du corps 4, ce qui permet, par un mouvement de rotation (45° dans le sens horaire), commandé par l'opérateur du côté froid à l'aide de la poignée de commande, d'effectuer le verrouillage des systèmes baïonnettes des pièces 4 et 12. La bague coulissante sollicitée par le ressort 23 se déplace et vient verrouiller le système baïonnette du corps 4 par l'intermédiaire d'une encoche 30 et des deux pieds 17 solidaires du corps 16. De par la conception des axes 17, comme il a été mentionné dans la description générale, la sécurité de déverrouillage de cet axe se trouve assurée. L'assemblage des 2ème et 3ème éléments est alors effectué.

### 2. Montage du 1er élément avec la pince

Le 1er élément, équipé de sa pince, est comme mentionné ci-dessus, monté dans un appareil qui va permettre d'effectuer la connection avec les éléments 2 et 3, dont le montage a été décrit ci-dessus.

Les mouvements nécessaires pour assembler ce nouvel élément sont identiques à ceux effectués pour le montage des éléments 2 et 3, à savoir :

Le corps équipé de sa pince 1 est immobilisé dans l'appareil de montage ; l'axe 13 étant immobilisé dans le corps de pince, introduire l'embout du 2ème élément dans le corps 1 en se référant à un repère visuel gravé sur la bague coulissante 3 ; les pieds 5 et 24 se trouvant en face des baïonnettes, effectuer un mouvement de poussée, la bague coulissante 3 qui est guidée par une lumière 25 dans son déplacement latéral s'enfonce et dégage la baïonnette du corps 1, ce qui permet par un mouvement de rotation (45° dans le sens horaire), commandé par l'opérateur du côté froid à l'aide de la poignée de commande, d'effectuer le verrouillage des systèmes baïonnettes des pièces 13 et 1. La bague coulissante sollicitée par le ressort 23 se déplace et vient verrouiller le système baïonnette du corps 1 par l'intermédiaire d'une encoche 29 située sur la bague et des deux pieds 5 solidaires du corps 4.

De par l'immobilisation en rotation de l'axe 13 de commande de la pince, la sécurité de déverrouillage de pince se trouve assurée.

L'assemblage des trois éléments constituant ce raccord est alors effectué.

### B. Sortie

Pour pouvoir sortir le télémanipulateur, il faut procéder inversement, c'est-à-dire :

a) déconnecter la pince équipée du 1er élément,

b) déconnecter le raccord du télémanipulateur (3ème élément) du raccord étanche (2ème élément).

### 1. Déconnection pince et 1er élément

Introduire cet ensemble dans l'appareil de montage et démontage en prenant soin d'embrocher la prise râtelier 26 prévue sur la bague coulissante 3 ; effectuer un effort de traction à l'aide du télémanipulateur. La bague coulissante 3 immobilisée dans la prise râtelier va permettre de dégager l'encoche 29 qui se trouve sur la bague coulissante ; les pieds 5 se trouvent donc libérés. Effectuer un mouvement de rotation (45° dans le sens anti-horaire), mouvement effectué par l'opérateur du côté froid à l'aide de la poignée de commande, pour déconnecter les pieds 5 et 24 des deux systèmes baïonnette. Sous l'action du ressort 23, l'assemblage des 2ème et 3ème éléments se trouve libéré et en position pour une nouvelle connection.

### 2. Déconnection du raccord de télémanipulateur (3ème élément) et du raccord étanche (2ème élément)

Introduire cet ensemble dans l'appareil de montage et démontage en prenant soin d'embrocher la prise râtelier 27 prévue sur la bague coulissante 7, effectuer un effort de traction à l'aide du télémanipulateur ; la bague coulissante 7 immobilisée dans la prise-râtelier va permettre de dégager l'encoche 30 qui se trouve sur la bague coulissante 7 ; les pieds 17 et 28 se trouvent donc libérés. Effectuer un mouvement de rotation (45° dans le sens anti-horaire), mouvement effectué par l'opérateur du côté froid, à l'aide de la poignée de commande, pour déconnecter les pieds 17 et 28 des deux systèmes baïonnettes. Sous l'action du ressort 23, l'assemblage du raccord du télémanipulateur (3ème élément) au raccord étanche (2ème élément) se trouve libéré et en position pour une nouvelle connection.

### C. Montage ou démontage de la pince équipée du 1er élément avec l'embout du télémanipulateur (3ème élément) sans raccord étanche (2ème élément)

Dans ce cas d'utilisation, le montage ou démontage est similaire à celui décrit ci-dessus ; la non-utilisation du raccord étanche (2ème élément) ne modifie pas le mode opératoire.

### Revendications

1. Raccord étanche pour télémanipulateur destiné notamment à la manipulation à distance de produits radioactifs ou dangereux, comprenant un premier élément (1, 3) appelé ci-après « raccord de pince » et comportant la pince, un second élément (4, 7, 11) appelé ci-après « raccord étanche » et un troisième élément (15, 16) appelé ci-après « raccord du télémanipulateur », le raccord étanche étant emboîté coaxialement dans le raccord de pince et le raccord du télémanipulateur étant emboîté coaxialement dans le raccord étanche et d'autre part, relié à un bras porteur articulé, ces trois éléments étant traversés de bout en bout par un axe mobile (12, 13, 18) en translation pour commander l'ouverture et la fermeture de la pince, cet axe étant composé des trois parties (12, 13 et 18), chaque partie de l'axe mobile étant reliée avec l'un des trois éléments proprement dits, l'ouverture du raccord étanche étant fermée par une membrane d'étanchéité (11) qui est reliée avec la partie (12) de l'axe mobile du raccord étanche, pouvant se déplier pendant toute la course en translation de l'axe mobile et accompagnant le déplacement de cet axe, la jonction entre les corps (1, 4, 16) des trois éléments proprement dits et entre les trois parties de l'axe mobile étant réalisée par un système de verrouillage à baïonnette qui permet d'effectuer la connexion ou la déconnexion à distance du raccord de pince et du raccord du télémanipulateur au raccord étanche, caractérisé par le fait que premièrement le système de verrouillage à baïonnette entre les corps (1, 4, 16) des trois éléments permet ce verrouillage par poussée axiale de l'élément (4, 7, 11, 12) à verrouiller (le raccord étanche ou le raccord du télémanipulateur 15, 16) contre l'élément de réception ((le raccord de pince (1,3) ou le raccord étanche (4, 7, 11)), puis par rotation de l'élément à verrouiller autour de son axe, des pieds (5, 17) ménagés radialement sur les corps (4, 16) des éléments à verrouiller venant alors s'engager dans des baïonnettes (2, 34) de l'élément de réception et étant automatiquement verrouillés dans celles-ci au moyen d'une pièce faisant partie (3, 7) de l'élément de réception, et deuxièmement les trois parties (12, 13 et 18) de l'axe mobile sont équipées d'un même système de verrouillage à baïonnettes que pour les corps (14, 16) des éléments, et les systèmes à baïonnettes sont alignés entre eux par l'immobilisation par paires et en rotation des trois parties de l'axe mobile par rapport aux corps (1, 4, 16) des éléments afin que l'assemblage des parties de l'axe mobile soit réalisé conjointement avec l'assemblage des trois corps (1), (4) et (16) des éléments du raccord par les mêmes mouvements d'assemblage, et que la sécurité du déverrouillage de la pince soit assurée.

2. Raccord selon la revendication 1, caractérisé en ce que le système de verrouillage du raccord étanche et du raccord de pince, comporte :

— pour le raccord de pince (1, 3), deux encoches ménagées radialement dans le corps (1) du raccord de pince, diamétralement opposées, et se prolongeant par des rainures à angles droits dans le corps (1), l'ensemble de ces encoches et échancrures formant les baïonnettes (2) précitées, ouvertes en direction du raccord étanche (4, 7, 11) intermédiaire, ainsi qu'une bague (3) montée coulissante sur le corps (1) constituant la pièce précitée et sollicitée constamment vers le raccord étanche par un organe élastique (23) de rappel intercalé entre la bague (8) et le corps (1) ;

— pour le raccord étanche, le système de verrouillage comprend complémentairement deux pieds (5) faisant saillie radialement du corps (4) dudit raccord étanche, solidaires de ce corps, diamétralement opposés et adaptés pour pouvoir s'engager dans les encoches formant les baïonnettes (2) du raccord de pince par poussée axiale sur le raccord étanche, les pieds (5) de ce dernier repoussant alors la bague coulissante (3) à l'encontre de la force élastique de l'organe de rappel (23) de ladite bague (3), puis pouvant s'introduire dans les rainures précitées par rotation du raccord étanche, après quoi la bague (3) est automatiquement rappelée par son organe élastique (23) et assure le verrouillage du raccord étanche (4, 7, 11) sur le raccord de pince (1, 3), le déverrouillage pouvant être exécuté par les manœuvres inverses de coulissement de la bague (3), puis rotation et translation du raccord étanche.

3. Raccord selon la revendication 2, caractérisé en ce que deux encoches (25, 29) diamétralement opposées sont formées dans la bague (3) pour recevoir les deux pieds (5) correspondants solidaires du raccord étanche, lors du rappel élastique de la bague coulissante (3) vers le raccord étanche, ce qui permet le verrouillage effectif de ce dernier sur le raccord de pince.

4. Raccord selon la revendication 3, caractérisé en ce que le système de verrouillage du raccord de télémanipulateur (16, 18) sur le raccord étanche comprend :

— pour le raccord étanche, deux encoches (34) ménagées radialement dans le corps (4) du raccord étanche, diamétralement opposées, et se prolongeant par des rainures à angles droits dans le corps (4), l'ensemble de ces encoches et échancrures formant les baïonnettes précitées (34), ouvertes en direction du raccord de télémanipulateur, ainsi qu'une bague (7) montée à coulisse sur le corps (4) constituant la pièce précitée et sollicitée constamment vers le raccord du télémanipulateur par un organe élastique (23) intercalé entre la bague (7) et le corps (4), des moyens étant en outre prévus pour immobiliser la bague (7) en rotation par rapport au corps (4) du raccord étanche ;

— pour le raccord du télémanipulateur, le système de verrouillage comprend complémentairement deux pieds (8, 17) faisant saillie radialement du corps (4) dudit raccord du télémanipulateur, solidaires de ce corps (4), diamétralement opposés et adaptés pour pouvoir s'engager dans les encoches formant les baïonnettes (34) du raccord étanche par poussée axiale sur le raccord du télémanipulateur, les pieds (8, 17) de ce dernier repoussant alors la bague coulissante (7) à l'encontre de la force élastique de l'organe de rappel (23) de ladite bague (7), puis pouvant s'introduire dans les rainures précitées par rotation du raccord du télémanipulateur, après quoi la bague (7) est automatiquement rappelée par son organe élastique (23) et assure le verrouillage du raccord du télémanipulateur sur le raccord étanche, le déverrouillage pouvant être exécuté inversement par coulissement axial de la bague (7) puis rotation et translation du raccord du télémanipulateur.

5. Raccord selon la revendication 4, caractérisé en ce que la bague coulissante (7) du raccord étanche est pourvue de deux encoches (30) diamétralement opposées, aptes à recevoir les deux pieds correspondants (17) du raccord de télémanipulateur pour verrouiller ce dernier lors du rappel élastique de ladite bague (7) à sa position initiale.

6. Raccord selon l'une des revendications 3 à 5, caractérisé en ce que des moyens sont prévus pour immobiliser en rotation les deux bagues coulissantes (3, 7) de verrouillage par rapport aux corps (1, 4) sur lesquels elles sont montées, par exemple des ergots (6, 8) solidaires desdits corps (1, 4) et engagés dans des lumières (25, 22) ménagées dans les bagues (3, 7) parallèlement à l'axe (12) du raccord.

7. Raccord selon l'une des revendications 1 à 5, caractérisé en ce que la membrane d'étanchéité (11) du raccord étanche intermédiaire a une configuration en forme de chapeau allongé ou sensiblement en tronc de cône, dont une extrémité de petit diamètre est fixée à l'axe (12), tandis que le pourtour de son extrémité de plus grand diamètre est encastré entre le corps (4) du raccord étanche et une bague (10) vissée à l'intérieur de celui-ci, cette membrane (11) pouvant ainsi se déplier ou se dérouler autour de l'axe (12) pendant toute la longueur des courses de ce dernier en maintenant intégralement l'étanchéité voulue entre la partie du raccord étanche du côté du raccord de pince (1, 3) et l'autre partie située du côté du raccord de télémanipulateur (15, 16).

## Claims

1. Gas-tight connector for a remote manipulator intended especially for remote handling of radioactive or hazardous products, comprising a first element (1, 3) designated hereinafter as a « tong-unit connector » and comprising the tong unit, a second element (4, 7, 11) designated hereinafter as a « gas-tight connector » and a third element (15, 16) designated hereinafter as a « remote-manipulator connector », the gas-tight connector being engaged coaxially within the tong unit connector and the remote-manipulator connector being engaged coaxially within the gas-tight connector and also coupled to an articulated supporting arm, these three elements being traversed from one end to the other by a shaft (12, 13, 18) which is capable of translational motion in order to initiate opening and closing of the tong unit, this shaft being composed of three components (12, 13 and 18), each component of the movable shaft being connected to one of the three elements proper, the opening of the gas-tight connector being closed by a sealing diaphragm (11) which is joined to the component (12) of the movable shaft of the gas-tight connector, which is capable of unfolding throughout the range of translational motion of the movable shaft and which accompanies the displacement of this shaft, the junction between the bodies (1, 4, 16) of the three elements proper and between the three components of the movable shaft being effected by means of a bayonet-type locking system which makes it possible to carry out remote connection or disconnection of the tong-unit connector and of the remote-manipulator connector with respect to the gas-tight connector, characterized in that firstly the bayonet-type system for locking between the bodies (1, 4, 16) of the three elements permits this locking action by axial thrust of the element (4, 7, 11, 12) to be locked (the gas-tight connector or the remote-manipulator connector 15, 16) against the receiving element (the tong-unit connector (1, 3) or the gas-tight connector (4, 7, 11)), then by rotation of the element to be locked about its axis, pins (5, 17) arranged radially in the bodies (4, 16) of the elements to be locked being then adapted to engage within bayonet sockets (2, 34) of the receiving element and being automatically locked within these latter by means of a member (3, 7) forming part of the receiving element, and secondly the three components (12, 13 and 18) of the movable shaft are equipped with the same bayonet-type locking system as the bodies (14, 16) of the elements, and the bayonet-type systems are aligned with respect to each other by securing in pairs and against rotation the three components of the movable shaft with respect to the bodies (1, 4, 16) of the elements in order to ensure that coupling of the components of the movable shaft is carried out conjointly with the coupling of the three bodies (1), (4) and (16) of the elements of the connector in the same coupling movements and that safety of release of the tong unit is ensured.

2. Connector in accordance with claim 1, characterized in that the system for locking the gas-tight connector and the tong-unit connector comprises :

— in the case of the tong-unit connector (1, 3), two recesses which are formed radially in the body (1) of the tong-unit connector, which are diametrically opposite, and which are provided with extensions in the form of grooves located at right angles in the body (1), the combination of these recesses and grooves being such as to form the aforesaid bayonet sockets (2) which are open in the direction of the intermediate gas-tight connector (4, 7, 11), as well as a ring (3) slidably mounted on the body (1) which constitutes the member aforesaid and is continuously urged towards the gas-tight connector by an elastic restoring member (23) interposed between the ring (8) and the body (1) ;

— in the case of the gas-tight connector, the locking system additionally comprises two pins (5) which project radially from the body (4) of said gas-tight connector, which are rigidly fixed to this body, which are diametrically opposite and are adapted to engage within the recesses forming the bayonet sockets (2) of the tong-unit connector as a result of axial thrust applied on the gas-tight connector, the pins (5) of this latter being then intended to thrust back the sliding ring (3) in opposition to the elastic force of the restoring member (23) of said ring (3), then to engage within the aforesaid grooves by rotation of the gas-tight connector, whereupon the ring (3) is automatically restored by its elastic member (23) and ensures locking of the gas-tight connector (4, 7, 11) onto the tong-unit connector (1, 3), unlocking being then permitted by means of the reverse operations of sliding displacement of the ring (3) followed by rotational and translational displacement of the gas-tight connector.

3. Connector in accordance with claim 2, characterized in that two diametrically opposite recesses (25, 29) are formed in the ring (3) for receiving the corresponding two pins (5) which are rigidly fixed to the gastight connector, at the time of elastic return of the sliding ring (3) towards the gas-tight connector, thereby permitting effective locking of this latter to the tong-unit connector.

4. Connector in accordance with claim 3, characterized in that the system for locking the remote-manipulator connector (16, 18) to the gas-tight connector comprises :

— in the case of the gas-tight connector, two recesses (34) which are formed radially in the body (4) of the gas-tight connector, which are diametrically opposite, and which are provided with extensions in the form of grooves located at right angles in the body (4), the combination of these recesses and grooves being such as to form the aforesaid bayonet sockets (34) which are open in the direction of the remote-manipulator connector, as well as a ring (7) slidably mounted on the body (4) which constitutes the member aforesaid and is continuously urged towards the remote-manipulator by an elastic member (23) interposed between the ring (7) and the body (4), means being further provided for locking the ring (7) rotationally with respect to the body (4) of the gas-tight connector ;

— in the case of the remote-manipulator connector, the locking system additionally comprises two pins (8, 17) which project radially from the body (4) of said remote-manipulator connector, which are rigidly fixed to this body (4), which are diametrically opposite and adapted to engage within the recesses forming the bayonet sockets (34) of the gas-tight connector as a result of axial thrust applied on the remote-manipulator connector, the pins (8, 17) of this latter being then intended to thrust back the sliding ring (7) in opposition to the elastic force of the restoring member (23) of said ring (7), then to engage within the aforesaid grooves by rotation of the remote-manipulator connector, whereupon the ring (7) is automatically restored by its elastic member (23) and ensures locking of the remote-manipulator connector to the gas-tight connector, unlocking being permitted by means of the reverse operations of axial sliding displacement of the ring (7) followed by rotational and translational displacement of the remote-manipulator connector.

5. Connector in accordance with claim 4, characterized in that the sliding ring (7) of the gas-tight connector is provided with two diametrically opposite recesses (30) which are capable of receiving the two corresponding pins (17) of the remote-manipulator connector in order to lock this latter in position at the time of elastic return of said ring (7) to its initial position.

6. Connector in accordance with any one of claims 3 to 5, characterized in that means are provided for securing the two sliding locking rings (3, 7) against rotation with respect to the bodies (1, 4) on which they are mounted, for example lugs (6, 8) which are rigidly fixed to said bodies (1, 4) and engaged in slots (25, 22) formed in the rings (3, 7) in a direction parallel to the axis (12) of the connector.

7. Connector in accordance with any one of claims 1 to 5, characterized in that the sealing diaphragm (11) of the intermediate gas-tight connector has a configuration in the form of an elongated cap or substantially in the shape of a cone frustum such that the small-diameter extremity is attached to the shaft (12) whilst the periphery of its large-diameter extremity is inserted between the body (4) of the gas-tight connector and a ring (10) screwed within the interior of this latter, this diaphragm (11) being thus capable of unfolding or unwinding around the shaft (12) throughout the entire ranges of travel of this latter while maintaining the full degree of requisite gas-tightness between that portion of the gas-tight connector which is located at the end nearest the tong-unit connector (1, 3) and the other portion located at the end nearest the remote-manipulator connector (15, 16).

**Ansprüche**

1. Dichte Kupplungsverbindung für Fernmanipulator, insbesondere zur Fernmanipulation radioaktiver oder gefährlicher Produkte, bestehend aus einem nachstehend als « Zangenanschlußteil » bezeichneten, die Zange aufnehmenden ersten Element (1, 3), einem nachstehend als « dichtes Verbindungsteil » bezeichneten zweiten Element (4, 7, 11) und einem nachstehend als « Anschlußteil für den Fernmanipulator » bezeichneten dritten Element (15, 16), wobei das dichte Verbindungsteil koaxial in das Zangenanschlußteil und das Anschlußteil für den Fernmanipulator koaxial in das dichte Verbindungsteil eingesetzt ist und andererseits mit einem gelenkigen Tragarm verbunden ist, wobei durch diese drei Elemente eine das Öffnen und Schließen der Zange steuernde, translatorisch bewegbare Achse (12, 13, 18) hindurchgeht, welche aus drei Teilen (12, 13 und 18) zusammengesetzt ist, von denen jedes mit einem der drei eigentlichen Elemente verbunden ist, wobei die Öffnung des dichten Verbindungsteiles durch eine Dichtmembrane (11) verschlossen ist, welche mit dem Teil (12) der bewegbaren Achse des dichten Verbindungsteiles verbunden ist und sich während der gesamten translatorischen Bewegung der bewegbaren Achse entfalten kann und die Verschiebung dieser Achse begleitet, und wobei die Verbindung der Hauptstücke (1, 4, 16) der drei eigentlichen Elemente der bewegbaren Achse durch ein Bajonettverschlußsystem realisiert ist, durch welches die Fernverbindung oderlösung des Zangenanschlußteiles und des Anschlußteiles für den Fernmanipulator mit dem oder vom dichten Verbindungsteil erzielbar ist, dadurch gekennzeichnet, daß erstens diese Verriegelung durch das Bajonettverschlußsystem zwischen den Hauptstücken (1, 4, 16) der drei Elemente durch Axialdruck des zu verriegelnden Elementes (4, 7, 11, 12) (das dichte Verbindungsteil oder das Anschlußteil für den Fernmanipulator 15, 16) gegen das Aufnahmeelement (das Zangenanschlußteil (1, 3) oder das dichte Verbindungsteil (4, 7, 11)), alsdann durch Drehung des zu verriegelnden Elementes um seine Achse erzielbar ist, wobei radial auf den Hauptstücken (4, 16) der zu verriegelnden Elemente angeordnete Klötze (5, 17) in die Bajonettfassungen (2, 34) des Aufnahmeelementes einrastbar sind und automatisch in demselben mittels eines einen Teil des Aufnahmeelementes bildenden Teiles (3, 7) verriegelbar sind, und daß zweitens die drei Teile (12, 13 und 18) der bewegbaren Achse mit einem gleichen Bajonettverschlußsystem wie für die Hauptstücke (14, 16) der Elemente ausgestattet sind und die Bajonettsystems untereinander durch paarweise und eine Drehung der drei Teile der bewegbaren Achse gegenüber den Hauptstücken (1, 4, 16) der Elemente verhindernde Blockierung ausgerichtet sind, sodaß der Zusammenbau der Teile der bewegbaren Achse zusammen mit dem Zusammenbau der drei Hauptstücke (1), (4) und (16) der Elemente der Kupplungsverbindung durch die gleichen Verbindungsbewegungen erzielbar ist und die Sicherheit der Entriegelung der Zange gewährleistet ist.

2. Kupplungsverbindung nach Anspruch 1, dadurch gekennzeichnet, daß das Verriegelungssystem des dichten Verbindungsteiles mit dem Zangenanschlußteil aufweist :

— für das Zangenanschlußteil (1, 3) zwei radial im Hauptstück (1) des Anschlußteiles ausgebildete diametral gegenüberliegende Aussparungen, welche sich im rechten Winkel dazu durch Schlitze im Hauptstück (1) fortsetzen, wobei diese Aussparungen und Schlitze die vorgenannten Bajonettfassungen (2), die zum dazwischen liegenden dichten Verbindungsteil (4, 7, 11) hin offen sind, ebenso bilden wie ein verschieblich auf dem Hauptstück (1) montierter Ring (3), der das vorgenannte Teil bildet und ständig durch ein zwischen dem Ring (3) und dem Hauptstück (1) eingesetztes elastisches Rückholorgan (23) zum dichten Verbindungsteil hin beaufschlagt wird ;

— für das dichte Verbindungsteil besitzt das Verriegelungssystem ergänzend zwei radial vom Hauptstück (4) dieses Verbindungsteiles abstehende, fest mit diesem Hauptstück verbundene Klötze (5), welche diametral einander gegenüberliegen und in die die Bajonettfassungen (2) bildenden Aussparungen des Zangenanschlußteiles durch Axialdruck auf das dichte Verbindungsteil eindrückbar sind, wobei die Klötze (5) entgegen der elastischen Kraft des Rückholorganes (23) des Ringes (3) diesen Gleitring (3) zurückstoßen und in die vorgenannten Schlitze des dichten Verbindungsteiles einführbar sind, woraufhin der Ring (3) automatisch durch sein elastisches Organ (23) zurückholbar ist und die Verriegelung des dichten Verbindungsteiles (4, 7, 11) auf dem Zangenanschlußteil (1, 3) gewährleistet, während die Entriegelung durch die umgekehrten Manöver der Verschiebung des Ringes (3) und die anschließende Drehung und Verschiebung des dichten Verbindungsteiles erzielbar ist.

3. Kupplungsverbindung nach Anspruch 2, dadurch gekennzeichnet, daß zwei diametral einander gegenüberliegende Schlitze (25, 29) im Ring (3) zur Aufnahme der entsprechenden beiden Klötze (5) des dichten Verbindungsteiles bei der elastischen Rückführung des Gleitringes (3) zum dichten Verbindungsteil hin ausgebildet sind, wodurch die effektive Verriegelung des letzteren auf den Zangenanschlußteil erzielbar ist.

4. Kupplungsverbindung nach Anspruch 3, dadurch gekennzeichnet, daß das Verriegelungssystem des Anschlußteiles für den Fernmanipulator (16, 18) auf dem dichten Verbindungsteil umfaßt :

— für das dichte Verbindungsteil zwei radial im Hauptstück (4) des dichten Verbindungsteiles ausgebildete, diametral gegenüberliegende, und sich durch Schlitze im rechten Winkel im Hauptstück (4) fortsetzende Aussparungen (34), wobei die Gesamtheit der Aussparungen und Schlitze die zum Anschlußteil für den Fernmanipulator hin offenen Bajonettfassungen (34) bildet, ferner einen verschieblich auf dem Hauptstück (4) montierten Ring (7), der das vorgenannte Teil bildet und ständig durch ein zwischen dem Ring (7) und dem Hauptstück (4) eingesetztes elastisches Organ (23) zum Anschlußteil für den Fernmanipulator hin beaufschlagt wird, wobei außerdem Organe vorgesehen sind, um eine Drehung des Ringes (7) gegenüber dem Hauptstück (4) des dichten Verbindungsteiles zu blockieren ;

— für das Anschlußteil für den Fernmanipulator umfaßt das Verriegelungssystem ergänzend zwei radial vom Hauptstück (4) des Anschlußteiles für den Fernmanipulator abstehende, fest mit diesem Hauptstück (4) verbundene Klötze (8, 17), welche diametral einander gegenüberliegend in die die Bajonettfassungen bildenden Aussparungen (34) des dichten Verbindungsteiles durch Axialdruck auf das Anschlußteil für den Fernmanipulator eindrückbar sind, wobei die Klötze (8, 17) dieses Anschlußteiles dann den Gleitring (7) entgegen der elastischen Kraft des Rückholorganes (23) dieses Ringes (7) zurückstoßen und in die vorgenannten Schlitze durch Drehung des Anschlußteiles für den Fernmanipulator einführbar sind, woraufhin der Ring (7) durch sein elastisches Organ (23) zurückholbar ist und die Verriegelung des Anschlußteiles für den Fernmanipulator auf dem dichten Verbindungsteil gewährleistet, während die Entriegelung in umgekehrter Weise durch Axialverschiebung des Ringes (7) und anschließende Drehung und Verschiebung des Anschlußteiles für den Fernmanipulator erzielbar ist.

5. Kupplungsverbindung nach Anspruch 4, dadurch gekennzeichnet, daß der Gleitring (7) des dichten Verbindungsteiles zwei diametral gegenüberliegende Schlitze (30) zur Aufnahme der entsprechenden Klötze (17) des Anschlußteiles für den Fernmanipulator zur Verriegelung desselben beim elastischen Rückgang dieses Ringes (7) in seine Ausgangsposition aufweist.

6. Kupplungsverbindung nach einem der Ansprüche 3 bis 5, dadurch gekennzeichnet, daß zur Blockierung einer Verdrehung der beiden Gleitringe (3, 7) zur Verriegelung auf den Hauptstücken (1, 4), auf denen sie montiert sind, Organe wie beispielsweise fest mit diesen Hauptstücken (1, 4) verbundene und in parallel zur Achse der Kupplungsverbindung verlaufende Schlitze (25, 22) der Ringe (3, 7) eingedrückte Zapfen (6, 8) vorgesehen sind.

7. Kupplungsverbindung nach einem der Ansprüche 1 bis 5, dadurch gekennzeichnet, daß die Dichtmembrane (11) des in der Mitte liegenden dichten Verbindungsteiles die Form eines verlängerten Hütchens oder im wesentlichen eines Kegelstumpfes hat, dessen enges Ende an der Achse (12) befestigt ist, während der Außenrand seines weitesten Endes zwischen dem Hauptstück (4) des dichten Verbindungsteiles und einem in dasselbe eingeschraubten Ring (10) derart eingeklemmt ist, daß diese Membrane (11) während der gesamten Länge der Bewegungen der Achse (12) sich auf dieser Achse entfalten oder abrollen kann, wobei sie die gewünschte Dichtheit zwischen dem Teil des dichten Verbindungsteiles an der Seite des Zangenanschlußteiles (1, 3) und dem an der Seite des Anschlußteiles für den Fernmanipulator (15, 16) liegenden anderen Teil vollkommen aufrechthält.

Fig:1

0 015 185

*Fig:2*

*Fig:3*

Fig: 5

Fig: 4

# Fig: 6

# Fig: 7